# EUROPÄISCHE PATENTSCHRIFT

(11) **EP 3 771 510 B1**
(45) Veröffentlichungstag und Bekanntmachung des Hinweises auf die Patenterteilung: **29.01.2025**
(21) Anmeldenummer: 20175642.6
(22) Anmeldetag: 20.05.2020
(51) Int. Cl.: B23B 29/24, B23B 29/20, B23B 29/04

(54) **WERKZEUGMASCHINE MIT EINEM BEWEGLICHEN WERKZEUGTRÄGER, WERKZEUGTRÄGER UND WERKZEUGHALTER DAFÜR**
TOOL HOLDER, MACHINE TOOL WITH MOVABLE TOOL HOLDER, AND TOOL BRACKET FOR SAME
MACHINE-OUTIL DOTÉE D'UN PORTE-OUTIL MOBILE, PORTE-OUTIL ET SUPPORT D'OUTIL CORRESPONDANT

(30) Priorität: 30.07.2019 DE 102019120522
(43) Veröffentlichungstag der Anmeldung: 03.02.2021
(60) Teilanmeldung: 24214537.3
(73) Patentinhaber: ESA Eppinger GmbH, 73770 Denkendorf (DE)
(72) Erfinder: Judas, Joel, 72669 Unterensingen (DE); Liedecke, Rolf, 70619 Stuttgart (DE)
(74) Vertreter: Rüger Abel Patentanwälte PartGmbB

(56) Entgegenhaltungen:
- EP-A1- 2 910 325
- EP-A1- 3 698 906
- DE-A1- 102017 007 905
- US-A- 5 873 682

## Beschreibung

Die Erfindung betrifft eine Werkzeugmaschine mit einem zur Bestückung mit Werkzeughaltern eingerichteten beweglichen Werkzeugträger, der Aufnahmen für jeweils einen Werkzeughalter aufweist, wobei jeder Werkzeughalter und der Werkzeugträger einander zugeordnete Auflageflächen und Einrichtungen zur Befestigung des Werkzeughalters an dem Werkzeugträger aufweisen und Stellmittel zur lagegenauen Positionierung des Werkzeughalters bezüglich seiner ihm zugeordneten Aufnahmen vorgesehen sind.

Beispielsweise CNC-Drehmaschinen oder CNC-Fräsmaschinen und Bearbeitungszentren arbeiten häufig mit einem beweglichen Werkzeugträger in Gestalt eines Werkzeugrevolvers, der mit verschiedenen Werkzeughaltern bestückt ist, die die für den jeweiligen Bearbeitungsvorgang erforderlichen Werkzeuge tragen. Dabei ist es bekannt, die einzelnen Werkzeughalter auf der jeweiligen Auflagefläche der zugeordneten Auflage des Werkzeugrevolvers mittels mehrerer Befestigungsschrauben zu befestigen. Beispiele hierfür sind in der DE 199 40 330 A1 und der DE 10 2008 048 206 A1 beschrieben. Bei vollautomatisch betriebenen Werkzeugmaschinen, die mit einem automatischen Werkzeugwechsel arbeiten ist das Lösen und Wiederfestziehen der Befestigungsschrauben der Werkzeughalter aufwendig. Konstruktiv einfachere Verhältnisse ergeben sich für einen automatischen Werkzeughalterwechsel, wenn die Werkzeughalter jeweils mit einer zentralen Spannvorrichtung arbeiten. Eines der bekanntesten Spannsysteme mit zentraler Spannung ist Gegenstand von DIN ISO 10889. Für Bearbeitungsvorgänge, die mit starker Beanspruchung der Werkzeuge und dennoch mit hoher Präzision ausgeführt werden müssen, ist die bei diesen Spannsystemen erzielbare Spannkraft nicht ausreichend, um den jeweiligen Werkzeughalter genau genug lagerichtig positioniert auf der Aufnahmefläche, beispielsweise eines Sternrevolvers zu halten.

Eine mit einem Werkzeughalter-Schnellwechsel-System ausgebildete Werkzeugspanneinrichtung die höchsten Anforderungen an die Positioniergenauigkeit genügt, ist aus der DE 10 2014 119 482 A1 bekannt. Die Einrichtungen zur Befestigung des Werkzeughalters an dem Werkzeugträger weisen dabei wenigstens zwei rechtwinklig zu der Auflagefläche des Werkzeughalters verlaufend angeordnete Zuganker auf, die im Abstand voneinander und von wenigstens einem Stellelement gesondert an dem Werkzeughalter oder -träger angeordnet sind. Eine an dem Werkzeugträger bzw. dem Werkzeughalter vorgesehene Spannvorrichtung greift bei in die Aufnahme des Werkzeugträgers eingesetztem Werkzeughalter, bei einem Spannvorgang an den Zugankern an und übt auf diese eine axiale Spannkraft aus. Die Spannvorrichtung weist in dem Werkzeugträger oder -halter beweglich geführte Spannelemente in Gestalt von Spannstangen auf, die mit den Zugankern über Keilgetriebe gekuppelt sind und über Betätigungsmittel von einer Außenseite des Werkzeugträgers und/oder -halters aus zugänglich sind.

Bei einer aus der DE 10 2017 007 905 A1 bekannten Festlegevorrichtung für Werkzeugmaschinen zum Festlegen von zumindest einem Werkzeughalter an einem Werkzeugträger ist zusätzlich zu einer ersten Befestigungseinrichtung mit Spannschrauben eine zweite Befestigungseinrichtung in der Art einer Schnellspanneinrichtung vorgesehen, die zumindest einen von dem Werkzeughalter abragenden Spannschaft aufweist, welcher in eine Aufnahme in den Werkzeugträger einführbar und mittels einer Spanneinrichtung der Schnellspanneinrichtung arretierbar ist. Die Spanneinrichtung weist zumindest zwei Spannelemente auf, die in einer Ausnehmung des Werkzeugträgers und quer zu einer Längsachse der Ausnehmung unter Wirkung eines Betätigungselementes verschiebbar sind und den Spannschaft von zwei Seiten umschließen. Ein Betätigungselement, das in zumindest eine radiale Ausnehmung mit einer konischen Flanke des Spannschafts eingreift, ist als Schraube ausgebildet, die in eine zugehörige Gewindebohrung des Werkzeugträgers eingeschraubt ist. Die mit einem Innensechskant ausgebildete Schraube ragt von dem Werkzeugträger nach außen und kann mit Hilfe eines entsprechenden Werkzeugs gedreht werden.

Ausgehend von diesem Stand der Technik liegt der Erfindung die Aufgabe zugrunde, eine Werkzeugmaschine, einen Werkzeugträger, insbesondere eine Revolverscheibe und einen zugehörigen Werkzeughalter zu schaffen, die für einen automatischen Werkzeugwechsel eingerichtet sind und sich bei hoher Positionier- und Lagegenauigkeit des Werkzeughalters auf dem Werkzeugträger durch eine einfache und sehr wirksame Spannfunktion der Werkzeughalter auf dem Werkzeugträger auszeichnen.

Zur Lösung dieser Aufgabe weist die Werkzeugmaschine gemäß der Erfindung die Merkmale des Patentanspruchs 1 auf.

Bei der neuen Werkzeugmaschine mit den eingangs genannten Merkmalen weisen die Einrichtungen zur Befestigung des Werkzeughalters auf dem Werkzeugträger wenigstens einen rechtwinklig zu der Auflagefläche des Werkzeughalters oder des Werkzeugträgers verlaufend angeordneten Zuganker auf, während dem Werkzeughalter und/oder dem Werkzeugträger eine Spannvorrichtung zugeordnet ist, die bei in die Aufnahme des Werkzeugträgers eingesetztem Werkzeughalter bei einem Spannvorgang an dem jeweiligen Zuganker angreifend und auf diesen eine axiale Spannkraft ausübend ausgebildet ist, mit der die Auflageflächen des Werkzeughalters und des Werkzeugträgers aufeinander gepresst sind.

Die Spannvorrichtung weist dabei wenigstens ein an dem Werkzeugträger quer zu dem Zuganker zwischen einer Spannstellung und einer Freigabestellung verstellbar gelagertes Spannelement auf, das eine erste Spannfläche trägt während an dem Zuganker eine zweite Spannfläche vorgesehen ist, mit der die erste Spannfläche des Spannelements in der Spannstellung selbsthemmend in Eingriff steht. Der Zuganker ist in Achsrichtung begrenzt elastisch verformbar und bei in der Spannstellung stehendem Spannelement über die miteinander in Eingriff stehenden Spannflächen in einem die erforderliche axiale Spannkraft erzeugenden Maße gedehnt. Das Spannelement ist über eine in Abhängigkeit von der Bewegung des Werkzeugträgers ansteuerbare Kupplung mit einer dem Werkzeugträger zugeordneten Stellvorrichtung kuppelbar, durch die es zwischen seiner Spannstellung und seiner Freigabestellung verstellbar ist.

Dadurch, dass die an dem Spannelement und dem zugeordneten Zuganker vorgesehenen Spannflächen in der Spannstellung selbsthemmend miteinander in Eingriff stehen, verbleibt jedes Spannelement unabhängig von der Bewegung und jeweiligen Stellung des Werkzeugträgers, beispielsweise der Revolverscheibe in seiner Spannstellung, ohne dass dazu von der Stellvorrichtung oder anderen Haltevorrichtungen dauernde Haltekräfte auf das Spannelement ausgeübt werden müssten, die es in der Spannstellung halten. Wenn zum Beispiel bei einer Revolverscheibe das Werkzeug eines Werkzeughalters in einer Arbeitsstellung steht, in der es auf das Werkstück einwirkt, kann die Werkzeughalter-Wechselposition am Umfang der Revolverscheibe, nach den räumlichen Erfordernissen der Werkzeugmaschine und deren Abdeckung beliebig zweckentsprechend gewählt werden. Der in Achsrichtung begrenzt elastisch verformbare Zuganker erlaubt es, durch einfache konstruktive Maßnahmen in einem weiten Rahmen hohe Spannkräfte entsprechend den jeweiligen Erfordernissen zu erzielen.

In einer bevorzugten Ausführungsform ist der Zuganker als Schaft des Werkzeughalters ausgebildet während der Werkzeugträger im Bereich seiner jeweiligen Aufnahme eine rechtwinklig zu seiner Aufnahmefläche verlaufende Aufnahmebohrung aufweist. Damit können Werkzeughalter einer gebräuchlichen Bauart verwendet werden, die einen zentralen Schaft aufweisen, durch den bei einem Werkzeughalter für angetriebene Werkzeuge die Werkzeugantriebswelle verläuft.

Der Werkzeugträger bedarf keiner besonders aufwendigen zusätzlichen konstruktiven Maßnahmen. Die Anbringung der für die Aufnahme der Spannelemente erforderlichen Längsführungen an der Revolverscheibe ist einfach zu bewerkstelligen.

Weitere vorteilhafte Ausgestaltungen und Weiterbildungen der Erfindung sind Gegenstand von Unteransprüchen.

In der Zeichnung sind Ausführungsbeispiele des Gegenstandes der Erfindung dargestellt. Es zeigen:
Figur 1 eine Werkzeugmaschine in Gestalt einer Drehmaschine gemäß der Erfindung, in vereinfachter schematischer perspektivischer Darstellung,
Figur 2 die Revolverscheibe des Werkzeugrevolvers der Werkzeugmaschine nach Figur 1, in einer Draufsicht auf die Rückseite,
Figur 3 die Revolverscheibe nach Figur 2 in einer Seitenansicht, teilweise aufgeschnitten längs der Linie III-III der Figur 2,
Figur 4 die Revolverscheibe nach den Figuren 2, 3 bestückt mit zwei Werkzeughaltern, in perspektivischer Darstellung mit Blick auf die Rückseite,
Figur 5 die Anordnung nach Figur 4 in einer anderen perspektivischen Darstellung,
Figur 6 bis 9 einen Werkzeughalter der Anordnung nach Figur 4 mit zugeordnetem Spannelement unter Veranschaulichung unterschiedlicher Stellungen des Spannelements bezüglich des Werkzeughalters, jeweils in perspektivischer Darstellung,
Figur 10 die Anordnung nach Figur 9, in einer Draufsicht,
Figur 11 die Revolverscheibe nach Figur 10 in einer abgewandelten Ausführungsform mit zusätzlichem Sicherungsring in perspektivischer Darstellung entsprechend Figur 4,
Figur 12 die Anordnung nach Figur 11, in einer anderen perspektivischen Darstellung entsprechend Figur 5,
Figur 13 einen Werkzeughalter der Anordnung nach Figur 4 in einer abgewandelten Ausführungsform und in perspektivischer Darstellung,
Figur 14 den Werkzeughalter nach Figur 13 mit abgenommenem ringförmigem Spannteil, in perspektivischer Darstellung,
Figur 15 das ringförmige Spannteil des Werkzeughalters nach Figur 13, in einer Ansicht von unten und in perspektivischer Darstellung,
Figur 16 das ringförmige Spannteil nach Figur 15, in einer Draufsicht und einer perspektivischen Darstellung,
Figur 17 die Revolverscheibe nach Figur 4/5 bestückt mit einem Werkzeughalter nach Figur 13, im axialen Schnitt in einer perspektivischen Teildarstellung und
Figur 18 die Anordnung nach Figur 17 in einer anderen perspektivischen Teildarstellung.

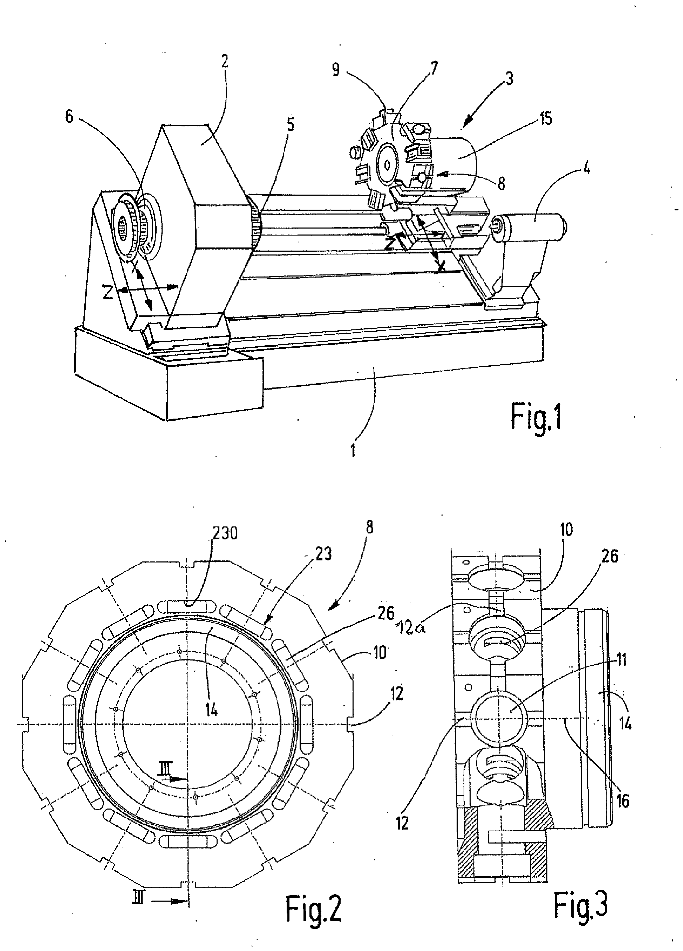

Die in Figur 1 beispielhaft schematisch skizzierte Drehmaschine weist ein Maschinengestell mit einem Sockel 1 auf, auf dem ein Spindelstock 2 und ein Werkzeugrevolver 3 jeweils in der X-,Z-Richtung verstellbar gelagert sind. Dem Spindelstock 2 ist eine ebenfalls in der Z-Richtung verfahrbare Pinole 4 zugeordnet, die zur Abstützung eines nicht weiter dargestellten Werkstücks dient, das in einem bei 5 angedeuteten Spannfutter auf der in dem Spindelstock 2 gelagerten Spindel 6 gespannt ist. Der Werkzeugrevolver 3 weist eine Revolverscheibe 7 auf, die einen Werkzeugträger bildet und auf deren Umfang Aufnahmen 8 für Werkzeughalter 9 vorgesehen sind, die für unterschiedliche Bearbeitungsaufgaben eingerichtet sind wie dies in Figur 1 schematisch angedeutet ist.

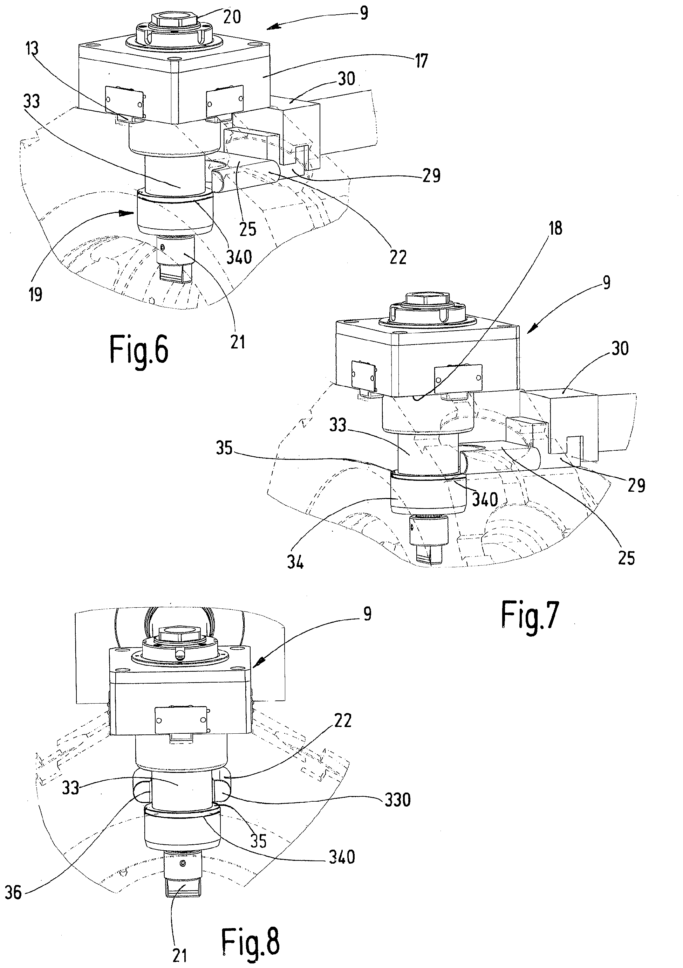

Jede der Aufnahmen 8 der polygonen Revolverscheibe 7 ist mit einer ebenen Auflagefläche 10 (Figur 2, 3) ausgebildet, durch die sich eine zentrale zylindrische Aufnahmebohrung 11 für den Schaft eines aufgesetzten Werkzeughalters 9 erstreckt. Jede Aufnahmefläche 10 ist außerdem mit kreuzweise angeordneten Aufnahmenuten 12 für an dem zugeordneten Werkzeughalter 9 vorgesehene Stellelemente 13 (vgl. zum Beispiel Figur 6) versehen, die zusammen mit den Aufnahmenuten 12 die exakt lagegenaue Positionierung eines aufgesetzten Werkzeughalters 9 gewährleisten.

Mittels eines auf ihrer Rückseite vorragend angeordneten Flansches 14 ist die Revolverscheibe in einem ihre Antriebseinrichtungen enthaltende Gehäuse 15 des Werkzeugrevolvers 3 um ihre Achse 16 drehbar gelagert. In an sich bekannter Weise kann die Revolverscheibe 7 von ihrer Antriebseinrichtung taktweise um ihre Drehachse 16 derart verdreht werden, dass jeweils wenigstens einer der Werkzeughalter 9 in einer Bearbeitungsstellung steht, in der das in ihm vorgesehene Werkzeug auf das Werkstück einwirkt.

Von den unterschiedlichen Werkstückhaltern 9 ist eine Bauart beispielhaft in den Figuren 6 bis 10 veranschaulicht. Der dargestellte Werkzeughalter 9 weist ein Gehäuse 17 auf, das mit einer ebenen Auflagefläche 18 ausgebildet ist, über die die Stellelemente 13 axial vorragen, die einen zentral angeordneten zylindrischen Schaft 19 umgeben, der bei auf die Revolverscheibe 7 aufgesetztem Werkzeughalter von der Aufnahmebohrung 11 der jeweiligen Aufnahme 8 aufgenommen ist. Durch den Schaft 19 verläuft die Antriebswelle für eine bei 20 angedeutete, in dem Gehäuse 17 drehbar gelagerte Spannzangeneinrichtung zur Aufnahme eines angetriebenen Werkzeugs. Die Werkzeugantriebswelle trägt an ihrem über den Schaft 19 vorragenden Ende ein Kupplungsstück 21 für eine im Bereich der Revolverscheibe 7 angeordnete Werkzeugantriebseinrichtung, die bei dem in der Bearbeitungsposition stehenden Werkzeughalter 9 dessen Werkzeug für den Bearbeitungsvorgang antreibt.

Zur Befestigung des Werkzeughalters 9 an der Revolverscheibe 7 ist der Schaft 19 als ein rechtwinklig zu der Auflagefläche 18 verlaufender Zuganker ausgebildet, der mit einer an der Revolverscheibe 7 vorgesehenen Spannvorrichtung zusammenwirkt. Diese Spannvorrichtung weist ein an der Revolverscheibe 7 quer zu dem Schaft 19 zwischen einer Spannstellung und einer Freigabestellung verstellbar gelagertes Spannelement in Gestalt eines Schiebers 22 auf, der in einer der jeweiligen Aufnahme 8 zugeordneten Längsführung 23 verschieblich geführt ist (Figur 2).

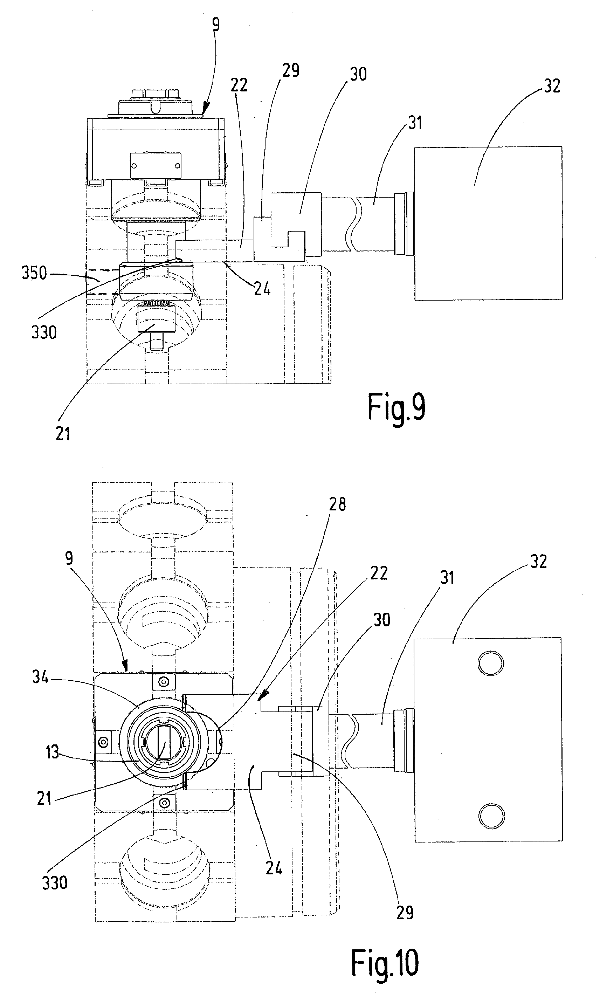

Der Schieber 22 ist im Querschnitt rechteckig und im Wesentlichen plattenförmig mit zueinander parallelen einander gegenüberliegenden breitseitigen Flächen 24, 25 ausgebildet, von denen die der Drehachse 16 der Revolverscheibe 7 zugewandte untere Fläche 24 als erste Spannfläche bezeichnet wird. Jede der Längsführungen 23 ist mit einer parallelflächig begrenzten schlitzartigen Öffnung 26 versehen, die von der dem Lagerflansch 14 zugewandten Rückseite der Revolverscheibe 7 aus sich bis in die Aufnahmebohrung 11 erstreckt und die so bemessen ist, dass sie den jeweiligen Schieber 22 im Schiebesitz aufnimmt. Die obere Begrenzungswand 230 der schlitzartigen Öffnung 26 ist in ihrer Lage bezüglich der Auflagefläche 10 der zugeordneten Aufnahme 8 eng toleriert. Der Schieber 22 ist an seiner der Revolverscheibe 7 zugewandten vorderen Stirnseite mit einer etwa halbkreisförmigen Ausnehmung 28 versehen, sodass er insgesamt eine etwa gabelförmige Gestalt aufweist. Er ist auf seiner der Ausnehmung 28 gegenüberliegenden Seite mit einem außerhalb der Revolverscheibe 7 liegenden ersten Kupplungselement 29 verbunden, das in Gestalt eines sich zum Umfang der Revolverscheibe 7 hin öffnenden Hakens ausgebildet ist, wie dies beispielsweise den Figuren 7 und 9 zu entnehmen ist. Die Dicke, d.h. der Abstand zwischen den breitseitigen Flächen 24, 25 des Schiebers 22 ist ebenfalls eng toleriert, sodass der axiale Abstand zwischen der ersten Spannfläche 24 und der Auflagefläche 10 exakt und mit enger Toleranz einem vorbestimmten Maß entspricht.

Mit dem ersten Kupplungselement 29 kann ein zweites Kupplungselement 30 in Eingriff gebracht werden, das über eine Betätigungsstange 31 mit einer Stellvorrichtung 32 gekuppelt ist, die dazu eingerichtet ist, den Schieber 22 über die Kupplungselemente 29, 30 in seiner Längsführung 23 zwischen einer Spannstellung und einer Freigabestellung hin und her zu verstellen. Die Stellvorrichtung 32 kann beispielsweise einen Hydraulikzylinder oder ein anderes mechanisches oder elektromechanisches Antriebselement enthalten, das von außen wahlweise ansteuerbar ist und es erlaubt, der Betätigungsstange 31 die erwähnte hin- und hergehende lineare Bewegung zu erteilen. Die Hakenform der komplementären Kupplungselemente 29, 30 ist so konfiguriert, dass die beiden Kupplungselemente 29, 30 bezogen auf Figur 10 quer zu dem Schieber 22 unbehindert verschieblich sind. Sie können deshalb durch eine Drehbewegung der Revolverscheibe 7 um die Achse 16 miteinander in oder außer Eingriff gebracht werden.

Der Schaft 19 des Werkzeughalters 9 ist in Achsrichtung begrenzt elastisch dehnbar ausgebildet. Zu diesem Zwecke ist bei dem dargestellten Ausführungsbeispiel der Schaft 19 mit einem Bereich verringerten Durchmessers gestaltet, der ein Dehnelement 33 bildet. Alternativ könnte die elastische Dehnfähigkeit des Schaftes 19 auch durch andere Maßnahmen erreicht werden, beispielsweise durch eine entsprechend geringe Wandstärke oder zweckentsprechende Einschnitte oder vergleichbare Elemente, die die erforderliche Dehnfähigkeit ergeben.

Das Dehnelement 33 ist auf der dem Werkzeughalter 9 abgewandten Seite durch eine Ringschulter 34 begrenzt, die eine rechtwinklig zu der Achse des Schaftes 19 verlaufende zweite Spannfläche 35 bildet. Diese zweite Spannfläche 35 ist derart positioniert, dass bei in die Aufnahme 8 eingesetztem Werkzeughalter 9 die auf der Unterseite des zugeordneten Schiebers 22 befindliche erste Spannfläche 24 um ein geringes vorbestimmtes Maß unterhalb der zweiten Spannfläche 35 des Schaftes 19 liegt, derart, dass bei übereinander geschobenen Spannflächen 24, 35 über den in der Längsführung 23, bezogen auf die Revolverscheibe 7, radial abgestützten Schieber 22 der Schaft 19 im Bereiche seines Dehnelements 33 axial elastisch in dem Maße gedehnt wird, dass die für ein sicheres Aufpressen der Auflagefläche 18 des Werkzeughalters 9 auf die Auflagefläche 10 der Revolverscheibe 7 erforderliche vorbestimmte Spannkraft erzeugt wird. Der gedehnte Schaft 19 wirkt dabei als ein an dem Gehäuse 17 des Werkzeughalters 9 zentral angreifender Zuganker.

An der Außenkante der ersten Spannfläche 24 des Schiebers 22 und/oder der zweiten Spannfläche 35 des Schaftes 19 ist jeweils eine Auflaufschräge 330 bzw. 340 vorgesehen, die das Aufschieben des Schiebers 22 auf die zweite Spannfläche 35 an dem Schaft 19 erleichtert.

Die etwa halbkreisförmige Ausnehmung 28 an dem Schieber 22 weist eine Gabelweite auf, die mit radialem Spiel dem Durchmesser des Dehnelements 33 des Schaftes 19 entspricht, sodass bei in der Spannstellung stehendem Schieber 22 eine satte Auflage seiner ersten Spannfläche 24 auf der zweiten Spannfläche 35 des Schaftes 19 gewährleistet ist. Die erste Spannfläche 24 ragt darum in der Regel über die Mittelachse des zylindrischen Dehnelementes 33 radial hinaus.

Die Funktionsweise der beschriebenen Spannvorrichtung ist wie folgt:
Ausgehend von dem in einer zurückgezogenen Freigabestellung stehenden Schieber 22 entsprechend Figur 6 ist ein Werkzeughalter 9 von einer automatischen Werkzeughalter-Wechselvorrichtung oder von Hand durch einen Bediener mit ihrem Schaft 19 in die entsprechende Aufnahmebohrung 11 der zugehörigen Aufnahme 8 der Revolverscheibe 7 lagerichtig eingesetzt worden.

Anschließend wird durch eine entsprechende Ansteuerung die Stellvorrichtung 32 veranlasst, den Schieber 22 gegen den Schaft 19 vorzuschieben derart, dass über die Auflaufschrägen 330/340 die erste Spannfläche 24 des Schiebers 22 auf die zweite Spannfläche 35 des Schaftes 19 aufgeschoben und dabei der Schaft 19 radial nach innen gezogen wird, sodass über das Dehnelement 33 die erforderliche axiale Spannkraft erzeugt wird, mit der der Werkzeughalter 9 auf die Revolverscheibe 7 aufgepresst wird. Die Situation beim Auflaufen des Schiebers 22 auf die zweite Spannfläche 35 ist in Figur 7 veranschaulicht.

Der Schieber 22 wird nach dem Auflaufen seiner ersten Spannfläche 24 auf die zweite Spannfläche 35 des Schaftes 19 in die in Figur 8 dargestellte Stellung vorgeschoben, in der eine sichere satte Eingriffnahme der beiden Spannflächen gewährleistet ist. Um das beschriebene Vorschieben des Schiebers 22 zu erleichtern kann die Ausnehmung 28 an ihrem vorderen Ende ebenfalls Einführschrägen 36 aufweisen, wie dies in Figur 8 angedeutet ist.

Da die beiden Spannflächen 24, 35 in parallelen Ebenen liegen ist der Schieber 22 in seiner eingeschobenen Spannstellung entsprechend Figur 8 selbsthemmend mit dem Schaft 19 in Eingriff gehalten. Die Stellvorrichtung 32 braucht deshalb keine Haltekraft auf den zugeordneten Schieber 22 auszuüben. Die Revolverscheibe 7 kann ohne Einflussnahme der Stellvorrichtung 32 in jede beliebige Winkelposition gedreht werden, da die hakenförmige ausgebildeten Kupplungselemente 29, 30 die Drehbewegung der Revolverscheibe 7 bei gespannten Werkzeughaltern 9 nicht behindern.

Bei dem dargestellten Ausführungsbeispiel sind die erste und die zweite Spannfläche 24 bzw. 35 wie erwähnt parallel zueinander ausgerichtet. Es sind auch Ausführungsformen denkbar, bei denen diese Flächen einen kleinen Winkel miteinander einschließen, um beispielsweise eine Nachstellung der Schieber 22 bezüglich des jeweiligen Schaftes 19 zu ermögliche, wie sie beispielsweise zum Ausgleich von Verschleiß oder Fertigungstoleranzen zweckmäßig sein kann. Die hakenförmigen Kupplungselemente 29, 30 haben dafür ein ausreichend großes Spiel ihrer Hakenöffnungen. In jedem Fall muss aber die selbsthemmende gegenseitige Eingriffnahme der Spannflächen gewährleistet bleiben.

Die Schieber 22 werden bei dem dargestellten Ausführungsbeispiel von der Rückseite der Revolverscheibe 7 her betätigt. Grundsätzlich sind auch Ausführungsformen denkbar, bei denen die Schieber von der Vorderseite der Revolverscheibe aus zur Betätigung zugänglich sind. Auch muss die zweite Spannfläche 35 nicht unbedingt durch eine Ringschulter des Schaftes 19 gebildet sein. Es sind auch andere Ausbildungen etwa in Form von Nuten, Absätzen und dergleichen denkbar. In jedem Fall wirkt der Schaft 19 als Zuganker, der zentral an dem Werkzeughalter angreift, wobei gewährleistet ist, dass dieser durch die Einwirkung der Spannkraft und die Betätigung der Spannelemente nicht verformt wird und die Spannkraft rechtwinklig zu den Auflageflächen 10, 18 wirkt.

Die neue Werkzeugmaschine mit ihrem beschriebenen Werkzeugträger und ihrem Werkzeughaltern ist insbesondere für den automatischen Werkzeugwechsel eingerichtet. Dazu ist vom Hersteller der Maschine eine bestimmte Werkzeugwechselposition der Revolverscheibe 7 festgelegt. In dieser Werkzeughalter-Wechselposition der Revolverscheibe 7 soll der jeweils auszuwechselnde Werkzeughalter gut zugänglich sein um einen problemlosen Werkzeughalterwechsel zu gewährleisten, während ein anderer in der Bearbeitungsposition stehender Werkzeughalter mit seinem Werkzeug einen Bearbeitungsvorgang vornimmt. Die Werkzeughalter-Wechselposition und die Bearbeitungsposition stehen in keinem direkten Zusammenhang. Es muss nur sichergestellt sein, dass die Spannvorrichtung des auszuwechselnden Werkzeughalters durch einen Maschinenbediener oder ein entsprechendes Handhabungssystem unbehindert betätigt werden kann.

Zum Wechseln eines Werkzeughalters 9 fährt die Revolverscheibe 7 in ihre Werkzeughalterwechselposition, in der die Stellvorrichtung 32 angeordnet ist. Dabei kommen die Kupplungselemente 29, 30 des Schiebers 22 des auszuwechselnden Werkzeughalters 9 miteinander in Eingriff. Nunmehr wird entweder von der Steuerung der Werkzeugmaschine aus oder von dem Maschinenbediener die Stellvorrichtung 32 betätigt. Diese zieht über die Betätigungsstange 31 und die Kupplung 29/30 den Schieber 22 aus der Revolverscheibe 7 so weit heraus, dass er in die Freigabestellung nach Figur 6 kommt. Damit ist der Werkzeughalter 9 entriegelt. Er kann nun von der Revolverscheibe 7 abgenommen und durch einen anderen Werkzeughalter ersetzt werden, der in anhand der Figuren 6 bis 10 bereits beschriebener Weise gespannt wird. Dazu wird der Schieber 22 vorgeschoben, sodass er in die Revolverscheibe 7 einfährt, wobei über die Einführschrägen 330, 340 der Werkzeughalter 9, bezogen auf Figur 6, nach unten gezogen wird. Der Schieber 22 drückt auf die Spannfläche 35 an dem Schaft 19 und verformt das Dehnelement 33 am Schaft des Werkzeughalters, womit der Werkzeughalter 9 auf der Auflagefläche 10 der Revolverscheibe 7 gespannt wird. Jetzt kann ein weiterer Werkzeughalter gewechselt werden oder die Revolverscheibe fährt mit dem neuen eingewechselten Werkzeughalter in die Bearbeitungsposition und beginnt mit dem Bearbeitungsvorgang.

Wie bereits erwähnt, ist die Antriebsart der Stellvorrichtung 32 zweckentsprechend zu wählen. Es muss lediglich eine mechanische Wirkverbindung zu dem Schieber 22 vorhanden sein. Diese Verbindung kann, wie dargestellt, direkt über ein Gestänge erfolgen, sie kann aber auch über eine oder mehrere Umlenkungen geschehen. Es muss lediglich die Linearbewegung des Schiebers zum Spannen des Werkzeughalters erreicht werden. Anstelle des bereits erwähnten Hydraulikzylinders kann auch beispielsweise ein Gewindestange eingesetzt werden, um eine Drehbewegung eines Motors in eine Linearbewegung umzuwandeln.

Da die Stellvorrichtung 32 fest in der Werkzeugmaschine verbaut ist, erfolgt ihre Ansteuerung zweckmäßigerweise über die Werkzeugmaschine selbst. Dadurch kann sichergestellt werden, dass der Werkzeughalterwechsel nicht zur Unzeit eingeleitet wird. Die Einleitung des Werkzeughalterwechsels kann entweder vom Maschinenbediener oder über die Maschinensteuerung erfolgen, indem der Maschinenbediener einen entsprechenden Befehl an die Steuerung gibt. Der Werkzeughalterwechsel kann auch durch ein Handhabungssystem der Maschine vollautomatisch erfolgen, wobei die Steuerung des Handhabungssystems mit der Steuerung der Werkzeugmaschine gekoppelt ist um den Werkzeughalterwechsel zu steuern.

Die Spannkraft mit der der Werkzeughalter 9 auf der Revolverscheibe 7 gespannt ist, wird durch die elastische Verformung des Schaftes 19 erzeugt. Es sind aber grundsätzlich auch Ausführungsformen denkbar, bei denen einem Werkzeughalter mehrere axial elastisch verformbare Zuganker zugeordnet sind, die mit grundsätzlich in der beschriebenen Weise zugeordneten Spannelementen zusammenwirken und an die Stelle des Schaftes 19 treten oder zusätzlich zu diesem vorhanden sind.

Der Schaft 16 ist mit einem gewissen radialen Spiel in seiner Aufnahmebohrung 11 der Revolverscheibe 7 aufgenommen. Dadurch ist vermieden, dass die exakte Positionierung des Werkzeughalters 9 auf der zugeordneten Aufnahmefläche 10 der Werkzeugscheibe 7, die durch das Zusammenwirken der Stellelemente 13 mit den Aufnahmenuten 12 gewährleistet ist, durch den in eine enge Aufnahmebohrung eingezwängten Schaft beeinträchtigt werden kann. Insbesondere bei kleinem Schaftdurchmesser kann es deshalb zweckmäßig sein, auf der dem Schieber gegenüberliegenden Seite in der Aufnahmebohrung 11 ein Widerlager für den Schieber vorzusehen, um zu vermeiden, dass der Schaft beim Einfahren des Schiebers 22 seitlich ausgelenkt wird. Ein solches Widerlager kann etwa durch ein in Figur 9 lediglich schematisch angedeutetes eigenes Widerlagerelement 350, beispielsweise einen in die Aufnahmebohrung 11 geringfügig vorragenden Schraubenbolzen oder durch einen entsprechenden geringfügigen seitlichen Versatz zumindest eines Teils der Innenwandung der Aufnahmebohrung 11 gebildet sein.

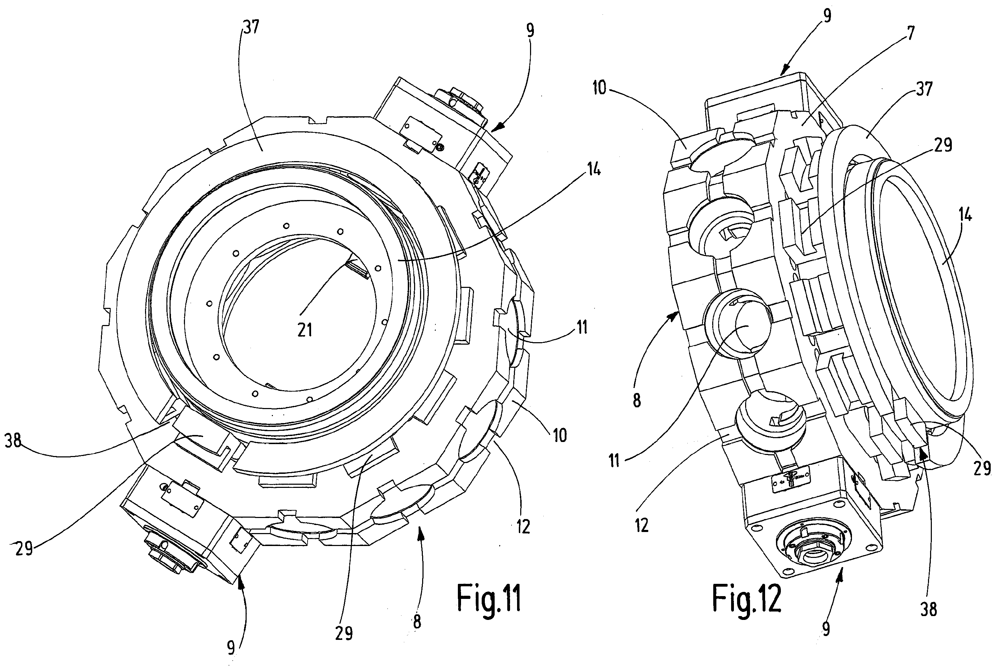

Wie bereits erläutert, sind die Schieber 22 reibschlüssig in ihrer Spannstellung gehalten, ohne dass es dazu der Einwirkung der Stellvorrichtung 32 bedürfte. Beispielsweise bei Bearbeitungsvorgängen, die starke Vibrationen erzeugen, etwa bei Fräsarbeiten mit unterbrochenem Schnitt kann es zweckmäßig sein, zusätzliche Sicherungsmaßnahmen vorzusehen, die ein unbeabsichtigtes Lösen der in der Spannstellung stehenden Schieber 22 verhindern. Solche Sicherungsmittel sind in den Figuren 11, 12 beispielhaft veranschaulicht:

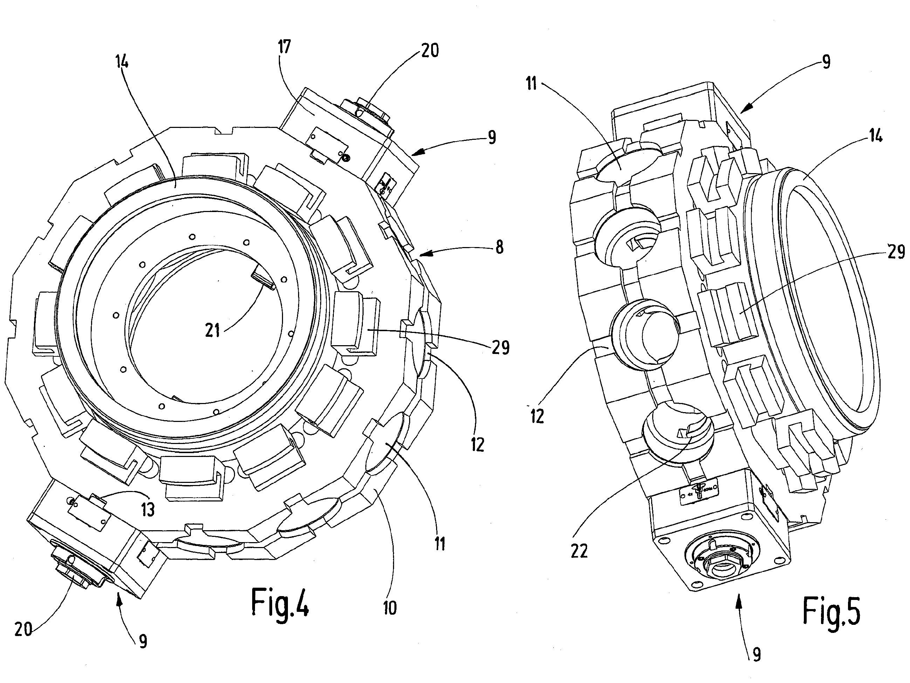

Diese Figuren zeigen die Revolverscheibe 7 in perspektivischen Ansichten, die der Darstellung nach den Figuren 4, 5 entsprechen. Gleiche Teile sind deshalb mit gleichen Bezugszeichen gezeichnet und nicht nochmals erläutert.

Die Sicherungsmittel weisen einen im Querschnitt rechteckigen Ring 37 auf, der auf der Rückseite der Revolverscheibe 7 ortsfest an dem Gehäuse 15 des Werkzeugrevolvers 3 (Figur 1) angeordnet ist. Der Ring 37 erstreckt sich in geringem axialen Abstand längs der hakenförmigen Kupplungselemente 29, der in der Spannstellung stehenden Schieber 22 derart, dass diese bezogen auf Figur 12 an einer Auswanderungsbewegung nach rechts, d.h. von der Rückseite der Revolverscheibe 7 weg gehindert sind. An einer Stelle weist der Ring 37 eine Unterbrechung 38 auf, deren Breite derart bemessen ist, dass sie den Durchtritt der Kupplungselemente 29, 30 der an dieser Stelle angeordneten Stellvorrichtung 32 gestattet, wie dies aus Figur 11 zu entnehmen ist. Der Ring 37 ist deshalb so positioniert, dass er den Werkzeughalterwechsel an der rings um den Umfang der Revolverscheibe 7 frei wählbaren Werkzeughalter-Wechselposition nicht behindert.

Nach Abschluss eines Werkzeughalter-Wechselvorgangs ist der entsprechende Schieber entsprechend Figur 9 wieder vollständig in seine Spannstellung eingeschoben, womit die Revolverscheibe 7 wieder frei weitergeschaltet werden kann, sodass das Werkzeug eines anderen Werkzeughalters in die Bearbeitungsposition kommt und ein an der Werkzeughalterwechselposition ankommender Werkzeughalter in bereits erläuterter Weise ausgewechselt werden kann.

Die Erfindung wurde anhand eines Werkzeugträgers in Gestalt eines Sternrevolvers 3 beispielhaft erläutert. Sie ist aber auch für anders gestaltete Werkzeugrevolver geeignet und kann auch für Werkzeugträger eingesetzt werden, die eine lineare Bewegung ausführen, um ihre Werkzeuge in die jeweilige Bearbeitungsposition beziehungsweise in die Werkzeughalter-Wechselposition zu bringen.

Wie anhand der beschriebenen Ausführungsbeispiele der Revolverscheibe 7 und der Werkzeughalter 9 erläutert, gleitet bei einem Spannvorgang eines Werkzeughalters 9 der zugeordnete Schieber 22 mit seiner ersten Spannfläche 24 über die zweite Spannfläche 35 an dem einen Zuganker bildenden Schaft 19 des Werkzeughalters 9. Der Schieber 22 ist dabei über seine der Spannfläche 24 gegenüberliegende breitseitige Fläche 25 an der oberen Begrenzungswand 230 der schlitzartigen Öffnung 26 der Längsführung 23 abgestützt, sodass er die zum lagerichtigen Spannen des Werkzeughalters 9 erforderliche, verhältnismäßig große Spannkraft auf den als Zuganker wirkenden Schaft 19 übertragen kann. Dies bedeutet, dass die miteinander zusammenwirkenden Spannflächen 24, 35 und 25, 230 so gestaltet und mit solchen Materialpaarungen ausgebildet sein müssen, dass die Funktionsweise auch bei längeren Betriebszeiträumen der Werkzeugmaschine nicht durch Verschleißerscheinungen an diesen Flächen beeinträchtigt wird. Die Flächen 24, 25, 35 und 230 können deshalb beispielsweise, gegebenenfalls einzeln oder paarweise, mit einer geeigneten Beschichtung vorzugsweise aus Hartstoffen (zum Beispiel TiC, TiN, etc.) versehen sein. Möglich ist es auch, an dem Schieber 22 oder der ihn aufnehmenden schlitzartigen Öffnung 26 der Längsführung 23 aus einem verschleißfesten Material bestehende oder mit einem solchen Material beschichtete Einsätze vorzusehen, die die Oberflächen 24, 25, 230 und 35 tragen.

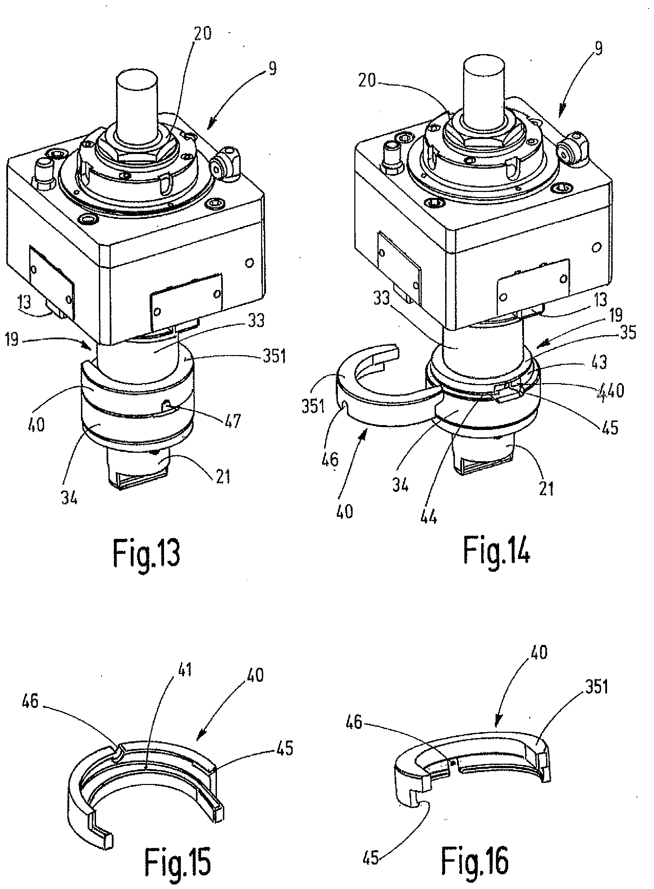

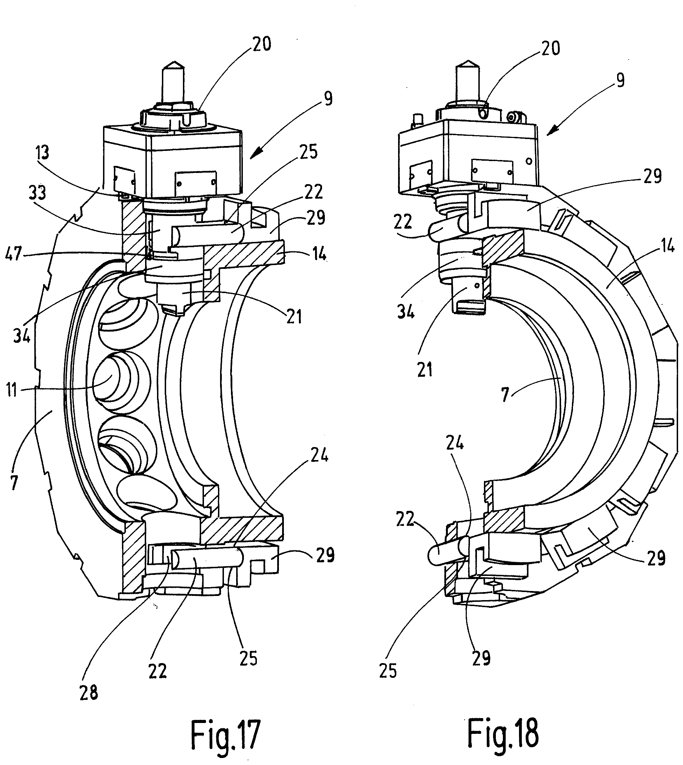

In den Figuren 13, 14 ist ein Ausführungsbeispiel eines Werkzeughalters dargestellt, bei dem diesen Erwägungen der Verschleißfestigkeit der miteinander in Eingriff stehenden Funktionsflächen des Schiebers 22 und des Werkzeughalters 9 durch besondere Maßnahmen Rechnung getragen ist:
Der Werkzeughalter 9 entspricht in seinem grundsätzlichen Aufbau dem anhand der Figuren 6 bis 10 erläuterten Werkzeughalter 9, während die in den Figuren 17, 18 dargestellte Revolverscheibe 7 mit den zugeordneten Spannvorrichtungen für die Werkzeughalter 9 den Ausführungsformen nach den Figuren 4, 5 entspricht. Gleiche Teile sind deshalb mit gleichen Bezugszeichen versehen und nicht nochmals erläutert.

Während bei der Ausführungsform des Werkzeughalters 9 nach den Figuren 6 bis 10 die zweite Spannfläche 35 unmittelbar an der Ringschulter 34 des Schaftes 19 ausgebildet ist, ist bei der Ausführungsform nach den Figuren 13, 14 die hier mit 351 bezeichnete zweite Spannfläche an einem eigenen ringförmigen Spannteil 40 ausgebildet, dessen Einzelheiten insbesondere aus den Figuren 15, 16 zu ersehen sind. Das Spannteil 40 besteht aus einem verschleißfesten Material, beispielsweise einem Hartstoff. Es kann auf seiner Spannfläche 351 auch eine verschleißfeste und eine günstige Flächenpaarung ergebende Beschichtung tragen, wie dies bereits erwähnt wurde. Das Spannteil 40 ist als Ringsegment figuriert, d.h., es weist eine im Wesentlichen hufeisenförmige Gestalt auf, deren Innendurchmesser in dem Bereich der Spannfläche 351 dem Durchmesser des zylindrischen Dehnelementes 33 entspricht, sodass es von der Seite her auf das Dehnelement 33 aufgeschoben werden kann. Im aufgeschobenen Zustand nimmt das Spannteil 40 die in Figur 13 dargestellte Stellung ein, in der es mit seiner der maßgenau feinbearbeiteten zweiten Spannfläche 351 gegenüberliegenden unteren Auflagefläche 41 auf der Spannfläche 35 Ringschulter 34 des Schaftes 19 satt aufliegt. Die Auflagefläche 41 ist maßgenau feinbearbeitet. Ihr axialer Abstand von der parallelen Spannfläche 351 ist genau so festgelegt, dass die zweite Spannfläche 351 im montierten Zustand in bereits beschriebener Weise mit der Spannfläche 24 an dem Schieber 22 zusammenwirken kann.

Um das ringförmige Spannteil 40 auf dem Schaft 19 verdrehsicher zu halten, ist an dem Schaft 19 an der Ringschulter 34 ein Ringflansch 43 ausgebildet, der an seinem Umfang eine Ringnut 44 trägt, in die eine ringförmige Schulter 45 des Spannteils 40 eingreifen kann, sodass das Spannteil 40 im aufgeschobenen Zustand axial unverschieblich auf dem Schaft gehalten ist. Außerdem ist an der Umfangsfläche des Ringflansches 43 wenigstens eine Abflachung 440 vorhanden, der eine entsprechende Abflachung auf der Innenseite des Spannteils 40 zugeordnet ist und die eine Verdrehsicherung des auf den Schaft 19 aufgeschobenen Spannteils 40 bewirkt. Der Abflachung 440 kann beispielsweise auf der diametral gegenüberliegenden Seite des Schaftes eine zweite entsprechende Abflachung zugeordnet sein, wie es denkbar ist, auch mehrere solche Abflachungen 440 um den Umfang des Ringflansches 43 verteilt vorzusehen, um damit den Werkzeughalter 9 wahlweise in mehreren Drehstellungen eines Schaftes auf der Revolverschiebe 7 spannen zu können.

Im Bereich der Abflachung 440 ist eine radiale Gewindebohrung 45 vorhanden, mit der im aufgesetzten Zustand des Spannteils 40 eine an diesem vorgesehene randoffene Ausnehmung 46 fluchtet. In die Gewindebohrung 45 kann eine in Figur 17 dargestellte, das Spannteil 40 unverlierbar auf dem Schaft 19 haltende Sicherungsschraube 47 eingeschraubt werden.

Vor dem Einsetzen des Werkzeughalters 9 in die Revolverscheibe 7 wird ausgehend von dem Zustand nach Figur 14 das hufeisenförmige Spannteil 40 (bezogen auf Figur 14 um 90° nach rechts geschwenkt) auf den Ringflansch 43 aufgeschoben und in dem Zustand nach Figur 13 durch die Sicherungsschraube 47 fixiert.

Das ring- oder hufeisenförmige Spannteil 40 kann einfach ausgetauscht werden, wenn Verschleißerscheinungen dies als zweckmäßig erscheinen lassen. Außerdem können mit Spannteilen 40 verschiedener axialer Dicke, durch entsprechende Einstellung des Abstandes zwischen den Flächen 41, 351, die beim Spannvorgang auftretende Spannkraft den jeweiligen Erfordernissen angepasst oder eine Herstellungstoleranz ausgeglichen werden. Wie beispielsweise den Figuren 17, 18 zu entnehmen, liegt das ringförmige Spannteil 40 mit seinem geschlossenen Umfangsbereich dem Schieber 22 gegenüber, sodass es beim Spannvorgang von dem Schieber 22 nicht von dem Schaft 19 weggedrückt werden kann.

Das Spannteil 40 kann auch mehrteilig ausgebildet sein, wie auch Ausführungsformen des Werkzeughalters denkbar sind, bei denen auf den Ringflansch 43 verzichtet oder dieser beispielsweise durch Nuten oder dergleichen an dem Schaft 19 ersetzt ist.

## Patentansprüche

1. Werkzeugmaschine mit einem zur Bestückung mit Werkzeughaltern eingerichteten beweglichen Werkzeugträger (7) der Aufnahmen (8) für Werkzeughalter (9) aufweist, wobei jeder Werkzeughalter (9) und der Werkzeugträger (7) einander zugeordnete Auflageflächen (10, 18) und Einrichtungen zur Befestigung des Werkzeughalters (9) an dem Werkzeugträger (7) aufweisen und Stellmittel (12, 13) zur lagegenauen Positionierung des Werkzeughalters (9) bezüglich einer ihm zugeordneten Aufnahme (8) vorgesehen sind und
wobei die Einrichtungen zur Befestigung des Werkzeughalters (9) wenigstens einen rechtwinklig zu der Auflagefläche (10, 18) des Werkzeughalters (9) oder des Werkzeugträgers (7) verlaufend zugeordneten Zuganker (19) aufweisen und dem Werkzeughalter (9) und/oder dem Werkzeugträger (7) eine Spannvorrichtung zugeordnet ist, die bei in die Aufnahme (8) eingesetztem Werkzeughalter (9) bei einem Spannvorgang an dem jeweiligen Zuganker (19) angreifend und auf diesen eine axiale Spannkraft ausübend ausgebildet ist, mit der die Auflageflächen (10, 18) des Werkzeughalters (9) und des Werkzeugträgers (7) aufeinander gepresst sind, wobei die Spannvorrichtung wenigstens ein an dem Werkzeugträger (7) quer zu dem Zuganker (19) zwischen einer Spannstellung und einer Freigabestellung verstellbar gelagertes Spannelement (22) aufweist, das eine erste Spannfläche (24) trägt wobei
an dem Zuganker (19) eine zweite Spannfläche (35) vorgesehen ist,
**dadurch gekennzeichnet,**
**dass** die zweite Spannfläche (35) mit der ersten Spannfläche (24) des Spannelements (22) in der Spannstellung selbsthemmend in Eingriff steht,
**dass** der Zuganker in Achsrichtung begrenzt elastisch verformbar ist und bei in der Spannstellung stehendem Spannelement (22)über die miteinander in Eingriff stehenden Spannflächen (24, 35) in einem die erforderliche axiale Spannkraft erzeugende Maße gedehnt ist,
**dass** das Spannelement (22) über eine Abhängigkeit von der Bewegung des Werkzeugträgers (7) ansteuerbare Kupplung (29, 30) mit einer dem Werkzeugträger (7) zugeordneten Stellvorrichtung (32) kuppelbar ist, durch die es zwischen seiner Spannstellung und seiner Freigabestellung verstellbar ist,
**dass** der Werkzeugträger (7) zumindest in eine Bearbeitungsposition für einen auf einer seiner Aufnahmen (8) angeordneten Werkzeughalter (9) und in eine Werkzeughalterwechselposition bewegbar ist und
**dass** die das Spannelement (22) betätigende Stellvorrichtung (32) im Bereich der Werkzeughalterwechselposition angeordnet und fest in der Werkzeugmaschine verbaut ist und durch die lösbar ausgebildete Kupplung (29, 30) mit dem Spannelement (22) gekoppelt ist.

2. Werkzeugmaschine nach Anspruch 1, **dadurch gekennzeichnet, dass** der Zuganker (19) als Schaft des Werkzeughalters (9) ausgebildet ist und der Werkzeugträger (7) im Bereich seiner jeweiligen Aufnahme (8) eine rechtwinklig zu seiner Auflagefläche (10) verlaufende Aufnahmebohrung (11) aufweist.

3. Werkzeugmaschine nach Anspruch 1 oder 2, **dadurch gekennzeichnet, dass** der Zuganker (19) ein Dehnelement (33) aufweist.

4. Werkzeugmaschine nach einem der vorhergehenden Ansprüche, **dadurch gekennzeichnet, dass** das Spannelement (22) einen Schieber aufweist und der Werkzeugträger (7) im Bereich der jeweiligen Aufnahme (8) mit einer den Schieber aufnehmenden Längsführung (23) versehen ist.

5. Werkzeugmaschine nach Anspruch 4, **dadurch gekennzeichnet, dass** der Schieber (22) an seinem einen Ende gabelförmig mit einer den zugeordneten Zuganker (19) teilweise umfassenden Gabelweite ausgebildet ist und die erste Spannfläche (24) im Bereiche des gabelförmigen Endes angeordnet ist.

6. Werkzeugmaschine nach einem der vorhergehenden Ansprüche, **dadurch gekennzeichnet, dass** die erste und die zweite Spannfläche (24, 35) zueinander parallele Flächen sind, von denen wenigstens eine mit einer Auflaufschräge (330, 340) versehen ist.

7. Werkzeugmaschine nach einem der Ansprüche 1 bis 5, **dadurch gekennzeichnet, dass** die erste und die zweite Spannfläche (24, 35) selbsthemmend zusammenwirkende Keilflächen sind.

8. Werkzeugmaschine nach Anspruch 1, **dadurch gekennzeichnet, dass** die Kupplung ein mit dem Spannelement (24) verbundenes erstes Kupplungselement (29) aufweist, das abhängig von der Bewegung des Werkzeugträgers (7) selbsttätig mit einem komplementären zweiten Kupplungselement (30) der Stellvorrichtung ein- und auskuppelbar ausgebildet ist.

9. Werkzeugmaschine nach Anspruch 8, **dadurch gekennzeichnet, dass** zumindest eines der Kupplungselemente (29, 30) hakenförmig ausgebildet ist.

10. Werkzeugmaschine nach einem der vorhergehenden Ansprüche, **dadurch gekennzeichnet, dass** dem Werkzeugträger (7) Sicherungsmittel für die Spannelemente (22) zugeordnet sind durch die zumindest das Spannelement (22) für den in der Bearbeitungsposition stehenden Werkzeughalter (9) lagefest formschlüssig arretierbar ist.

11. Werkzeugmaschine nach Anspruch 10, **dadurch gekennzeichnet, dass** die Sicherungsmittel wenigstens ein Spannelemente (22) arretierendes Sicherungselement (37) aufweisen, das sich über eine Reihe von Aufnahmen (8) des Werkzeugträgers (7) erstreckt und im Bereiche der Werkzeughalterwechselposition des Werkzeugträgers unwirksam ist.

12. Werkzeugmaschine nach Anspruch 11, **dadurch gekennzeichnet, dass** das Sicherungselement (22) einen ortsfest gelagerten Ring (37) aufweist, der wenigstens im Bereich der Werkzeughalter-Wechselposition eine Unterbrechung (38) aufweist.

## Claims

1. Machine tool having a movable tool carrier (7) configured to be equipped with tool holders and comprising receptacles (8) for tool holders (9), wherein each tool holder (9) and the tool carrier (7) comprise support surfaces (10, 18) assigned to each other and devices for mounting the tool holder (9) to the tool carrier (7) and wherein adjustment means (12, 13) are provided for accurately positioning the tool holder (9) with respect to a receptacle (8) assigned thereto, and
wherein the devices for mounting the tool holder (9) comprise at least one tie rod (19) extending orthogonal to the support surface (10, 18) of the tool holder (9) or the tool carrier (7), and wherein the tool holder (9) and/or the tool carrier (7) have a clamping device assigned thereto, which, when the tool holder (9) is inserted into the receptacle (8), is configured to engage the respective tie rod (19) during a clamping process and to exert an axial clamping force thereon, with which the support surfaces (10, 18) of the tool holder (9) and the tool carrier (7) are pressed against one another, wherein
the clamping device comprises at least one clamping element (22) which is mounted on the tool carrier (7) transversely to the tie rod (19) and is adjustable between a clamping position and a release position, which clamping element (22) carries a first clamping surface (24), wherein a second clamping surface (35) is provided on the tie rod (19),
**characterized in that**
the second clamping surface (35) is in self-locking engagement with the first clamping surface (24) of the clamping element (22) in the clamping position,
the tie rod is elastically deformable to a limited extent in the axial direction and, when the clamping element (22) is in the clamping position, is stretched via the clamping surfaces (24, 35), which are engaging each other, to an extent that generates the required axial clamping force,
the clamping element (22) can be coupled to an adjusting device (32) assigned to the tool carrier (7) by means of a coupling (29, 30) which is controllable depending on the movement of the tool carrier (7), wherein the clamping element (22) is adjustable between its clamping position and its release position by the adjusting device (32),
the tool carrier (7) is movable at least into a machining position for a tool holder (9) arranged on one of its receptacles (8) and into a tool holder changing position,
the adjusting device (32) actuating the clamping element (22) is arranged in the area of the tool holder changing position and is firmly installed in the machine tool and is coupled to the clamping element (22) via the releasable coupling (29, 30).

2. The machine tool according to claim 1, **characterized in that** the tie rod (19) is configured as a shaft of the tool holder (9) and the tool carrier (7) has a receiving bore (11) extending orthogonal to its support surface (10) in the area of its respective receptacle (8).

3. The machine tool according to claim 1 or 2, **characterized in that** the tie rod (19) comprises a stretching element (33).

4. The machine tool according to anyone of the preceding claims, **characterized in that** the clamping element (22) comprises a slider and the tool carrier (7) is provided with a longitudinal guide (23) in the areaa of the respective receptacle (8), wherein the longitudinal guide (23) accommodates the slider (22).

5. The machine tool according to claim 4, **characterized in that** the slider (22) is formed to be fork-shaped at its one end with a fork width that partly encircles the assigned tie rod (19) and the first clamping surface (24) is arranged in the area of the fork-shaped end.

6. The machine tool according to anyone of the preceding claims, **characterized in that** the first and the second clamping surfaces (24, 35) are surfaces arranged parallel to each other, wherein at least one of the clamping surfaces (24, 35) is provided with a running-on slant (330, 340).

7. The machine tool according to anyone of claims 1 to 5, **characterized in that** the first and the second clamping surfaces (24, 35) are wedge surfaces that cooperate in a self-locking manner.

8. The machine tool according to claim 1, **characterized in that** the coupling comprises a first coupling element (29) connected to the clamping element (24), wherein the first coupling element (29) is configured to be automatically coupled and uncoupled with a complementary second coupling element (30) of the actuating device depending on the movement of the tool carrier (7).

9. The machine tool according to claim 8, **characterized in that** at least one of the coupling elements (29, 30) is hook-shaped.

10. The machine tool according to anyone of the preceding claims, **characterized in that** locking means for the clamping elements (22) are assigned to the tool carrier (7), by means of which at least the clamping element (22) for the tool holder (9) being in the machining position can be locked in a fixed position in a form-fitting manner.

11. The machine tool according to claim 10, **characterized in that** the locking means comprise at least one locking element (37) locking clamping elements (22), which extends along a series of receptacles (8) of the tool carrier (7) and is ineffective in the area of the tool holder changing position of the tool carrier.

12. The machine tool according to claim 11, **characterized in that** the locking element (22) comprises a stationarily mounted ring (37) that comprises an interruption (38) at least in the area of the tool holder changing position.

## Revendications

1. Machine-outil comprenant un porte-outil (7) mobile qui est prévu pour être équipé de supports d'outil et présente des logements (8) pour des supports d'outil (9), chaque support d'outil (9) et le porte-outil (7) présentant des surfaces d'appui (10, 18), mutuellement associées, et des dispositifs de fixation du support d'outil (9) au porte-outil (7), et des moyens de réglage (12, 13) étant prévus pour le positionnement précis du support d'outil (9) par rapport à un logement (8) qui lui est associé, et les dispositifs de fixation du support d'outil (9) présentant au moins un tirant (19) associé, s'étendant à angle droit par rapport à la surface d'appui (10, 18) du support d'outil (9) et/ou du porte-outil (7), et un dispositif de serrage étant associé au support d'outil (9) et/ou au porte-outil (7), qui, lorsque le support d'outil (9) est monté dans le logement (8), est réalisé de façon à agir, lors d'une opération de serrage, sur le tirant (19) respectif et à exercer une force de serrage axiale sur celui-ci, par laquelle les surfaces d'appui (10, 18) du support d'outil (9) et du porte-outil (7) sont pressées l'une contre l'autre, le dispositif de serrage présentant au moins un élément de serrage (22) qui est monté sur le porte-outil (7) avec possibilité de déplacement entre une position de serrage et une position de libération, transversalement au tirant (19), et porte une première surface de serrage (24), une deuxième surface de serrage (35) étant prévue sur le tirant (19),
**caractérisée en ce que**
la deuxième surface de serrage (35) est en prise d'autoblocage avec la première surface de serrage (24) de l'élément de serrage (22), dans la position de serrage,
**en ce que** le tirant peut être déformé avec une élasticité limitée dans le sens axial et est étiré par l'intermédiaire des surfaces de serrage (24, 35) mutuellement en prise, dans un degré produisant la force de serrage axiale nécessaire, lorsque l'élément de serrage (22) occupe la position de serrage,
**en ce que** l'élément de serrage (22) peut être accouplé, par l'intermédiaire d'un accouplement (29, 30) pouvant être commandé fonction du mouvement du porte-outil (7), à un dispositif de manœuvre (32) qui est associé au porte-outil (7) et qui permet de le déplacer entre sa position de serrage et sa position de libération,
**en ce que** le porte-outil (7) peut être déplacé au moins dans une position d'usinage pour un support d'outil (9) disposé sur l'un de ses logements (8), et dans une position de changement de support d'outil, et
**en ce que** le dispositif de manœuvre (32) actionnant l'élément de serrage (22) est installé dans la région de la position de changement de support d'outil et est monté de façon stationnaire dans la machine-outil et est accouplé à l'élément de serrage (22) par l'intermédiaire de l'accouplement (29, 30) réalisé sous une forme amovible.

2. Machine-outil selon la revendication 1, **caractérisée en ce que** le tirant (19) est réalisé comme fût du support d'outil (9), et le porte-outil (7) présente, dans la région de son logement (8) respectif, un trou de montage (11) s'étendant à angle droit par rapport à sa surface d'appui (10).

3. Machine-outil selon la revendication 1 ou 2, **caractérisée en ce que** le tirant (19) présente un élément extensible (33).

4. Machine-outil selon une des revendications précédentes, **caractérisée en ce que** l'élément de serrage (22) présente un coulisseau, et le porte-outil (7) est doté, dans la région du logement (8) respectif, d'un guide longitudinal (23) accueillant le coulisseau.

5. Machine-outil selon la revendication 4, **caractérisée en ce que** le coulisseau (22) est réalisé en forme de fourche à l'une de ses extrémités, avec une largeur de fourche entourant partiellement le tirant (19) associé, et la première surface de serrage (24) est disposée dans la région de l'extrémité en forme de fourche.

6. Machine-outil selon une des revendications précédentes, **caractérisée en ce que** la première et la deuxième surface de serrage (24, 35) sont des surfaces qui sont parallèles l'une à l'autre et dont au moins une est pourvue d'un biseau d'entrée (330, 340).

7. Machine-outil selon une des revendications 1 à 5, **caractérisée en ce que** la première et la deuxième surface de serrage (24, 35) sont des surfaces en coin coopérant de manière à établir un autoblocage.

8. Machine-outil selon la revendication 1, **caractérisée en ce que** l'accouplement présente un premier élément d'accouplement (29) qui est relié à l'élément de serrage (24) et est réalisé de manière à pouvoir être accouplé et découplé automatiquement d'un deuxième élément d'accouplement (30) complémentaire du dispositif de manœuvre, en fonction du mouvement du porte-outil (7).

9. Machine-outil selon la revendication 8, **caractérisée en ce qu'**au moins un des éléments d'accouplement (29, 30) est réalisé sous forme de crochet.

10. Machine-outil selon une des revendications précédentes, **caractérisée en ce que** sont associés au porte-outil (7), des moyens de verrouillage pour les éléments de serrage (22), qui permettent de bloquer en position fixe, par complémentarité de forme, au moins l'élément de serrage (22) pour le support d'outil (9) occupant la position d'usinage.

11. Machine-outil selon la revendication 10, **caractérisée en ce que** les moyens de verrouillage présentent au moins un élément de verrouillage (37) qui bloque des éléments de serrage (22) et qui s'étend sur une série de logements (8) du porte-outil (7) et est inactif dans la région de la position de changement de support d'outil du porte-outil.

12. Machine-outil selon la revendication 11, **caractérisée en ce que** l'élément de verrouillage (22) présente une bague (37) qui est montée de manière stationnaire et présente une discontinuité (38) au moins dans la région de la position de changement de support d'outil.
